# EUROPEAN PATENT SPECIFICATION

(11) **EP 1 432 100 B1**
(45) Date of publication and mention of the grant of the patent: **29.02.2012**
(21) Application number: 02768065.1
(22) Date of filing: 25.09.2002
(51) Int. Cl.: H02K 3/34

(54) **Insulating member for electric machine coil and use thereof as a slot liner of rotating electric machine**
Isoliermaterial für die Spule einer elektrischen Maschine und dessen Verwendung als Nutisolierung in einer elektrischen Drehmaschine
Materiau isolant pour bobinage de machine électrique et utilisation de celui-ci comme isolant d'encoche dans une machine électrique tournante

(30) Priority: 28.09.2001 JP 2001299944; 28.09.2001 JP 2001299926
(43) Date of publication of application: 23.06.2004
(60) Divisional application: 08168747.7
(73) Proprietor: NIKKISO CO., LTD., Shibuya-ku Tokyo 150-8677 (JP)
(72) Inventor: WADA, Yoshihiko c/o Nikkiso Co., Ltd., Higashimurayama-shi, Tokyo 189-8520 (JP); KOIDE, Masamichi, Chigasaki-shi, Kanagawa 253-0087 (JP); OGURA, Akira c/o Nikkiso Co., Ltd., Higashimurayama-shi, Tokyo 189-8520 (JP); EGUCHI, Masaaki c/o Nikkiso Co., Ltd., Higashimurayama-shi, Tokyo 189-8520 (JP)
(74) Representative: GROSSE SCHUMACHER KNAUER VON HIRSCHHAUSEN
(86) International application number: PCT/JP2002/009877
(87) International publication number: WO 2003/030334

(56) References cited:
- FR-A- 2 341 923
- GB-A- 852 150
- GB-A- 996 901
- JP-A- 10 210 694
- JP-A- 11 018 343
- JP-A- 50 153 300
- JP-A- 54 025 498
- JP-A- 2000 287 401
- JP-A- 2001 231 206
- US-A- 3 710 437
- US-A- 4 013 987

## Description

### FIELD OF THE INVENTION

The present invention relates to an insulation member used in a coil of an electrical machine, and, in particular, to a structure of a slot liner placed within slots of a core of a motor for insulating between the core and coil conductors.

### BACKGROUND OF THE INVENTION

In a coil of an electrical machine, an insulation member is provided for ensuring insulation between a core and the coil of the electrical machine. A rotary electrical machine, such as an electrical motor, an electrical generator, or the like which is an electrical machine, has a core with a plurality of teeth. A coil conductor is stored in a space between the teeth, that is, in a slot. In order to ensure insulation between the coil conductor and the core, a sheet-shaped insulation member called a "slot liner" is placed between the coil conductor and the core.

In a rotary electrical machine or the like which is used under a high temperature environment, the insulation member also requires an adequate heat resistance. Typically, mica is used in this type of insulation member. There are two types of mica insulation member, one in the form of fine flakes and the other in the form of a thin film peeled from a mica stone. The fine flakes of mica put together through a resin is called "aggregated mica" and a few thin films of mica peeled from a mica stone which are attached together are called "peeled mica".

In an insulation member formed using the aggregated mica as described above, the heat resistance of the resin connecting the pieces of mica may sometimes be inadequate. In addition, because the material is brittle, there is a possibility that a hole may be formed during manufacture or a hole may be formed through vibrations and the like that occur while using rotary electrical machines, which may result in dielectric breakdown. An insulation member which uses the peeled mica, on the other hand, is weak against bending and may break when the insulation member is placed within the slot, causing dielectric breakdown. In addition, the peeled mica is expensive.

Moreover, a sheet-shaped insulation member using mica is weak against bending or the like, and, in particular, there had been a problem in that load may be applied when a portion of the coil which protrudes from the core end, which is called a coil end portion, is formed, and thus, the insulation member is easily damaged in this process. When this damage is problematic, conventionally, sheets of a material having relatively high mechanical strength, such as a resin, are layered on the insulation member to form a slot liner, the sheets having approximately the same size as the insulation member.

GB 852,150 discloses an electrically insulated conductor such as used for windings of dynamo-electric machines. The inner and outer layer of the insulation comprises mica paper on a backing member, which may be glass cloth.

US 4,103,987 discloses a mica tape binder, wherein mica flakes are sandwiched between a porous sheet backing material.

The layer of reinforcement resin of the slot liner described above is placed between the coil and core. Because of this, there had been a problem in that the resin may expand or deform under a high temperature and may be detached from the core, blocking transfer, to the core, of heat generated within the coil, to thereby reduce the heat dissipating ability of the coil.

### SUMMARY OF THE INVENTION

The present invention was conceived in view of the above-described problems, and an object of the present invention is to improve heat resistance and strength in an insulation member in a coil of an electrical machine. Another object of the present invention is to ensure the strength of a slot liner of a rotary electrical machine, prevent dielectric breakdown, and enhance the ability of the coil to dissipate heat.

The problems mentioned above is solved by an insulation member with the features of claim 1. A use of this insulation member is the subject of claim 2.

### BRIEF DESCRIPTION OF DRAWINGS

Fig. 1 shows a structure of a stator of an electrical motor which is an example of an electrical machine;
Fig. 2 shows placement of a slot liner within a slot;
Fig. 3 is a cross-sectional view of an insulation sheet forming a slot liner;
Fig. 4 is a cross-sectional view of an insulation sheet forming a slot liner;
Fig. 5 is a schematic cross-sectional view including a shaft of a stator core and
Fig. 6 is a perspective view showing another example of a reinforcement sheet.

### DESCRIPTION OF A PREFERRED EMBODIMENT

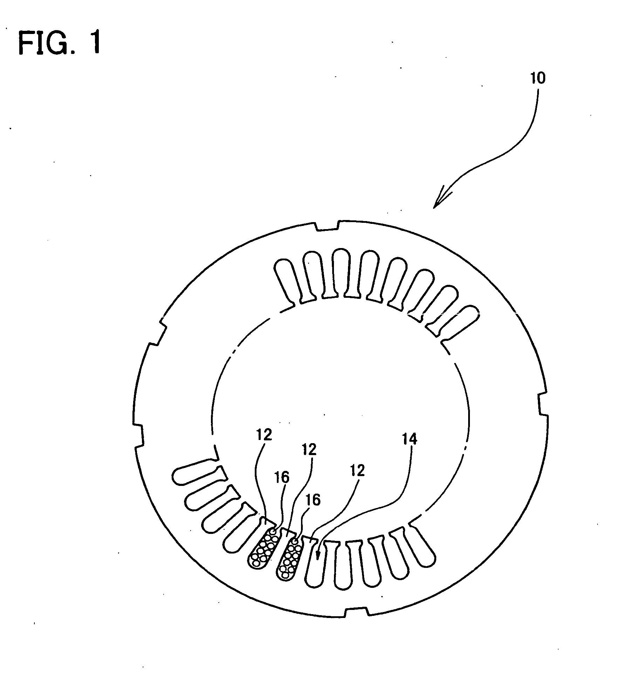

A preferred embodiment of the present invention will now be described referring to the drawings. Fig. 1 is a cross sectional view of a stator of a rotary electrical machine such as an electrical motor and an electrical generator. A core 10 of the stator has an approximately cylindrical shape and teeth 12 are placed on an inner perimeter surface of the core, that is, a surface opposing a rotor, with a predetermined space in a circumferential direction. Conductors 16 which form a coil are placed within a slot 14 which is the space between the teeth 12.

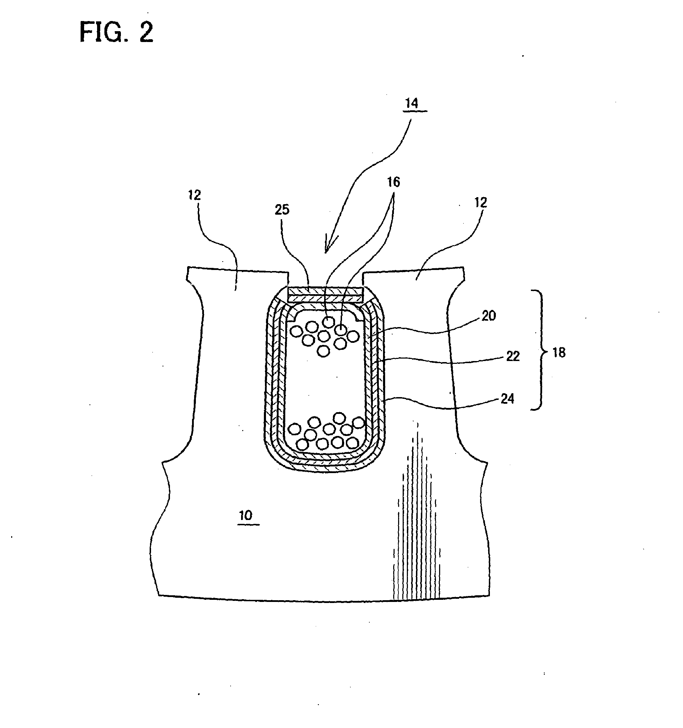

Fig. 2 is an enlarged diagram of one slot 14. A slot liner 18 is placed as an insulation member between the coil conductor 16 and the core 10 along the inner perimeter of the slot. The slot liner 18 is made of 3 layers, which will hereinafter be called, from the inside toward the outside, an inner layer 20, an intermediate layer 22, and an outer layer 24. The inner layer 20 and the outer layer 24 are each made of an insulation sheet of aggregated mica having a base member of aggregated mica. The intermediate layer 22 is made of an insulation sheet of peeled mica having a base member of peeled mica. In Fig. 2, the slot liner 18 is shown with the thickness being emphasized compared to the actual dimension in order to clearly show the structure of the slot liner 18. A wedge 25 is placed in an opening portion of the slot 14.

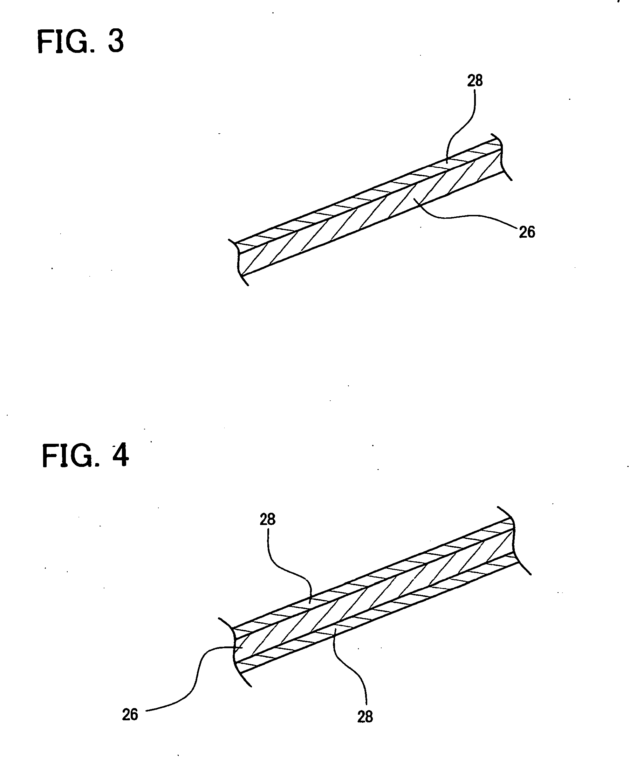

As shown in Fig. 3, an insulation sheet of aggregated mica is formed by layering a base member sheet 26 in which flakes of mica are attached together through a resin and a glass cloth sheet 28 which is woven from glass fiber. As shown in Fig. 4, the insulation sheet of aggregated mica is formed by sandwiching the base member sheet 26 containing aggregated mica with two glass cloth sheets and layering the base member sheet and glass sheets. The intermediate layer 22 sandwiched between the inner layer 20 and the outer layer 24 is made of a base insulation sheet of peeled mica having a base member of peeled mica. The insulation sheet of peeled mica is made to have a layered structure of two layers or three layers including a base member sheet containing peeled mica and one or more glass cloth sheets, as shown in Figs. 3 and 4.

The insulation sheet of aggregated mica is flexible and can be easily engineered, but has a relatively low dielectric strength. The insulation sheet of peeled mica, on the other hand, has a high dielectric strength, but is easily broken when bent. In addition, from the viewpoint of cost, the insulation sheet of peeled mica is more expensive. In a preferred embodiment of the present invention, by sandwiching an insulation sheet of peeled mica with two insulation sheets of aggregated mica to form a three-layered structure, the ease of engineering when the structure is inserted into a slot as a slot liner is improved. In other words, by sandwiching the insulation sheet of peeled mica which is easily broken with insulation sheets of aggregated mica having a relatively high mechanical strength, when the insulation sheets are to be bent, the insulation sheets of aggregated mica support the insulation sheet of peeled mica to prevent concentration of stress, to thereby prevent breakage. In addition, by using two insulation sheets of aggregated mica rather than using three insulation sheets of peeled mica, the overall cost can be reduced.

In this manner, an insulation member and a slot liner can be constructed which have advantageous characteristics of both an insulation sheet of peeled mica and an insulation sheet of aggregated mica. In addition, an insulation sheet of aggregated mica has a superior varnish impregnation characteristic, and thus, it is possible to further improve the insulation property from this regard.

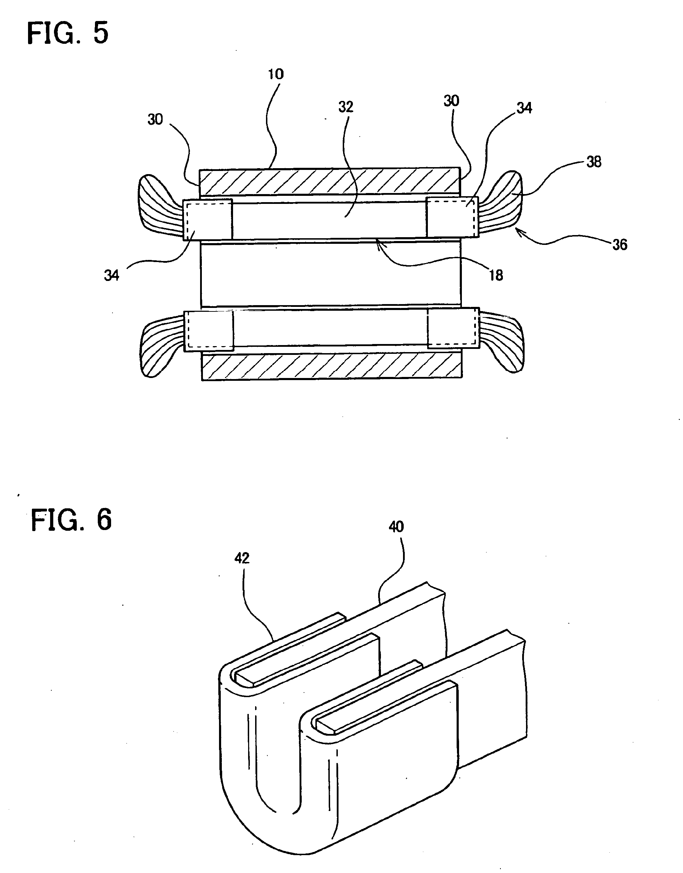

Fig. 5 is a cross sectional view showing a stater of an electrical motor seen from a direction perpendicular to the axis. The slot liner 18 extends in a direction along the axis of the electrical motor and has a longer length than that of the core 10 such that the ends of the slot liner 18 protrude from end surfaces 30 of the core. The slot liner 18 comprises a primary insulation sheet 32 made of the mica insulation sheet of three-layered structure as described above which extends over the entire length of the slot liner 18 and reinforcement sheets 34 placed only on both ends. As shown in Fig. 5, the reinforcement sheet 34 is placed on the outer periphery of the primary insulation sheet 32 by layering one layer at positions of the core end surface 30 and positions left of and right of the core end surface 30. That is, the reinforcement sheet 34 is interposed between the main insulation sheet 32 and the core 10.

A coil end 38 which is a portion of a coil 36, stored within a core, extruding from the core end surface is formed, after the coil is formed, in a bent manner in the radial direction outside the rotary electrical machine as shown in Fig. 5. At this point, the portion of the slot liner 18 protruding from the core end surface 30 is pushed and bending load is generated. In particular, at the corner portions of the core end surface 30, a high stress is generated. The reinforcement sheet 34 distributes the stress, and, at the same time, reduces the stress applied onto the primary insulation sheet 32. In this manner, the reinforcement sheet 34 prevents breakage of the insulation sheet made of mica which is mechanically weak so as to ensure insulation.

The reinforcement sheet 34 is made of a polyimide resin. The heat resistance of the polyimide resin is extremely high. For example, the heat resistance of KAPTON (registered trademark) of DuPont has a heat resistance of around 400 DEG C. Because the polyimide resin has such a high heat resistance, the polyimide resin is not carbonized even under a high temperature environment, and thus, it is possible to ensure insulation.

As shown in Fig. 5, there is no reinforcement sheet 34 at portions of the slot liner 18 other than the ends. Therefore, the heat generated when an electric current flows through the coil conductors is transferred to the core 10 without passing through the reinforcement sheet 34. In other words, the reinforcement sheet 34 does not block heat transfer at the central portion of the core, which allows for high heat dissipating properties. In addition, although the polyimide resin is not carbonized at a temperature of 400 DEG C, the polyimide resin shrinks at higher temperatures. There is a problem in that this shrinkage causes reduction in contact tightness between the core and reinforcement sheet which in turn blocks heat transfer. The reinforcement sheet 34 is placed only in the ends of the slot liner 18 also considering this problem. In other words, if the reinforcement sheet 34 is placed only on the ends, even when the reinforcement sheet shrinks, heat transfer at the central portion is not blocked and the thermal discharge property can be maintained.

Fig. 6 is a diagram showing another structure of ends of a slot liner. A primary insulation sheet 40 has a structure similar to the primary insulation sheet 28 described before. A reinforcement sheet 42 is placed on the end portions of the primary insulation sheet 40, that is, on the portions near the core ends. The reinforcement sheet 42 is folded so that the crease is positioned along the ends of the primary insulation sheet 40 such that the reinforcement sheet 42 is placed to cover the ends of the primary insulation sheet 40. In this manner, the ends of the primary insulation sheet 40 can be more firmly reinforced.

A slot liner according to the preferred embodiment of the present invention is particularly suited for use under a high temperature environment, for example, in a stator of an electrical motor of a canned motor pump which handles fluids of high temperature, but may also be used in other electrical machines with coils. In addition, in this description of the preferred embodiment, a construction is described in which a slot liner is formed by layering two types of mica insulation sheets and reinforcement sheets are placed only on the ends of the slot liner, but the present invention is not limited to such a configuration and a structure may be employed in which only one of these configurations is used. That is, it is possible to separately employ a configuration of a slot liner by layering two types of mica insulation sheets and a configuration in which a reinforcement sheet is placed only on the ends of the slot liner.

## Claims

1. An insulation member to be placed between a core (10) and a coil (36) of an electrical machine for insulating the core (10) and the coil (36), comprising:
an inner layer (20),
an intermediate layer (22) and
an outer layer (24),
**characterized in that**
the intermediate layer (22) is made of an insulation sheet of peeled mica having a layered structure of two or more layers including a base member sheet (26) containing peeled mica and one or more glass cloth sheets (28), and
wherein the inner layer (20) and the outer layer (24) are each made of an insulation sheet of aggregated mica having a base member (26) of aggregated mica sandwiched between two glass cloth sheets (28).

2. The use of an insulation member according to claim 1 as a slot liner (18) placed within a slot (14) of a core (10) of a rotary electrical machine for insulating a coil conductor placed within the slot (14) and the core (10).

## Patentansprüche

1. Isolierelement, das zwischen einem Kern (10) und einer Spule (36) einer elektrischen Maschine zu platzieren ist, um den Kern (10) und die Spule (36) zu isolieren, aufweisend:
eine innere Schicht (20),
eine Zwischenschicht (22) und
eine äußere Schicht (24),
**dadurch gekennzeichnet, dass**
die Zwischenschicht (22) aus einer Isolierbahn aus abgeschältem Glimmer besteht,
die eine geschichtete Struktur aus zwei oder mehr Schichten, welche eine Basiselementbahn (26), die abgeschälten Glimmer enthält, und eine oder mehrere Glasfasergewebebahnen (28) aufweist, und
wobei die innere Schicht (20) und die äußere Schicht (24) jeweils aus einer Isolierbahn aus aggregiertem Glimmer bestehen, die ein Basiselement (26) aus aggregiertem Glimmer aufweist, das sandwichartig zwischen zwei Glasfasergewebebahnen (28) angeordnet ist.

2. Verwendung eines Isolierelementes nach Anspruch 1 als Schlitzauskleidung (18), die innerhalb eines Schlitzes (14) eines Kerns (10) einer rotierenden elektrischen Maschine platziert ist, um einen innerhalb des Schlitzes (14) platzierten Spulenleiter und den Kern (10) zu isolieren.

## Revendications

1. Matériau isolant destiné à être placé entre un noyau (10) et un bobinage (36) d'une machine électrique pour isoler le noyau (10) et le bobinage (36), comprenant :
une couche interne (20),
une couche intermédiaire (22) et
une couche externe (24),
**caractérisé en ce que**
la couche intermédiaire (22) est constituée d'une feuille isolante de papier mica présentant une structure stratifiée de deux couches ou plus comprenant une feuille d'un élément de base (26) contenant du papier mica en feuille et une ou
plusieurs feuilles de toile de verre (28), et
dans lequel la couche interne (20) et la couche externe (24) sont réalisées chacune dans une feuille isolante de mica aggloméré ayant un élément de base (26) de mica aggloméré pris en sandwich entre deux feuilles de toile de verre (28).

2. Utilisation d'un matériau isolant selon la revendication 1 comme isolant d'encoche (18) placé à l'intérieur d'une encoche (14) d'un noyau (10) d'une machine électrique tournante pour isoler un conducteur de bobinage placé dans l'encoche (14) et le noyau (10).
